# EUROPÄISCHE PATENTANMELDUNG

(11) **EP 2 596 727 A2**
(43) Veröffentlichungstag der Anmeldung: **29.05.2013**
(21) Anmeldenummer: 12185904.5
(22) Anmeldetag: 25.09.2012
(51) Int. Cl.: A47J 31/44, F04B 35/04

(54) **Luftpumpe zum Dosieren von Luft in Milchschäumsystemen**

(30) Priorität: 07.10.2011 DE 102011084150
(71) Anmelder: WMF WÜRTTEMBERGISCHE METALLWARENFABRIK AG, 73309 Geislingen/Steige (DE)
(72) Erfinder: Bönsch, Torsten, 73312 Geislingen/Steige (DE); Dollner, Sander, 89079 Ulm-Wiblingen (DE)
(74) Vertreter: BRP Renaud & Partner

(57) **Zusammenfassung**

Die Erfindung betrifft eine Luftpumpe (1) zum Dosieren von Luft in Milchschäumsystemen in Kaffeeautomaten. Erfindungswesentlich ist dabei, dass die Luftpumpe (1) derart ausgebildet ist, dass sie eine in vordefinierten Grenzen frei wählbare und gleichmäßige Luftmengenförderung hinsichtlich Volumenstrom und/oder Strömungsgeschwindigkeit ermöglicht.

Hierdurch kann insbesondere eine kostengünstige und mit hoher Dosiergenauigkeit arbeitende Luftpumpe (1) erzielt werden.

## Beschreibung

Die vorliegende Erfindung betrifft eine Luftpumpe zum Dosieren von Luft in Milchschäumsystemen gemäß dem Oberbegriff des Anspruchs 1. Die Erfindung betrifft außerdem ein Baukastensystem für eine derartige Luftpumpe sowie einen Kaffeeautomaten mit einer derartigen Luftpumpe.

Viele Milchschäumsysteme, vor allen Dingen in Kaffeeautomaten, nützen Dampf zum Erwärmen und Fördern der Milch, welcher für die herzustellenden Getränke, wie bspw. Cappuccino, benötigt wird. Die zum Schäumen zusätzlich erforderliche Luft muss dem Milchschäumsystem dabei in hoher Genauigkeit und kontrollierbar zugeführt werden. Hierzu kann die benötigte Luft bspw. von einer Druckluftquelle stromauf einer Dampfdüse einer Dampfstrahlpumpe in eine Dampfleitung gepumpt (Venturieffekt) werden. Die verwendete Luftquelle ist hierbei eine Luftpumpe. Nachteilig bei dieser Ausführungsform ist jedoch, dass üblicherweise Membranpumpen oder Kolbenpumpen als Luftpumpen eingesetzt werden, die jeweils lediglich nur bedingt für den Einsatz in Milchschäumsystemen geeignet sind, da hier sehr hohe Gegendrücke an der Druckseite der Pumpe anliegen und im Gegenzug nur verhältnismäßig kleine Luftmengen gefördert werden sollen. Aus diesem Grund ist man bisher auf hoch spezialisierte und dadurch teure Luftpumpen angewiesen, welche diese hohen Anforderungen erfüllen. Als weiterer Nachteil bekannter Luftpumpen, wie bspw. Membranpumpen oder Kolbenpumpen, ist das Pulsieren zu nennen, wodurch kein stetiger Volumenstrom an Luft in das Milchschäumsystem eingeleitet werden kann.

Die vorliegende Erfindung beschäftigt sich daher mit dem Problem, eine verbesserte Luftpumpe zum Dosieren von Luft in Milchschäumsystemen anzugeben, die einerseits kostengünstig und andererseits zuverlässig und exakt hinsichtlich der Förderung ist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine bisher bekannte und zum Dosieren von Luft in Milchschäumsystemen in Kaffeeautomaten eingesetzte Luftpumpe derart weiterzubilden, dass diese eine in vordefinierten Grenzen frei wählbare und gleichmäßige Luftmengenförderung hinsichtlich Volumenstrom und/oder Strömungsgeschwindigkeit ermöglicht. Hierdurch ist eine Luftförderung in ihrer Menge und in der Charakteristik der Zuführung variabel, d.h. es sind sowohl eine gleichmäßige Luftströmung und sowie die Flussrate (Luft pro Zeit) frei einstellbar (gesteuert und/oder geregelt). Bei bisherigen Systemen pulsiert die Luft und der Volumenstrom ist abhängig von einer Pumpenkennlinie, die durch eine Spannungsänderung am Pumpenmotor oder Blenden nur begrenzt und aufwendig veränderbar ist. Mittels der erfindungsgemäßen Luftpumpe sind auch kleine und kleinste Luftmengen oder Volumenströme leicht und exakt zu fördern. Bei Milchschäumsystemen kommt hinzu, dass der Dampfstrom, in den die Luft eingeblasen werden soll, je nach Betriebszustand, in seinen Druckwerten in einem bestimmten Bereich variieren kann, wobei durch die erfindungsgemäße Luftpumpe die Möglichkeit zum Erzeugen eines dampfabhängigen Vordruckes durch den Dampf selbst besteht, um damit die beispielsweise als Kolbenpumpe ausgebildete Luftpumpe in ihrer Bewegung zu unterstützen, wodurch ein balanciertes System geschaffen werden kann. Die Luftpumpe kann dabei generell als Kolbenluftpumpe, insbesondere mit Doppelzylinder, Boxerkolben, doppelwirkender Zylinder usw., ausgeführt sein.

Bei einer vorteilhaften Weiterbildung ist die Luftpumpe als Kolbenpumpe ausgebildet, wobei die Kolbenpumpe zumindest einen Kolben aufweist, der mittels einer Antriebseinrichtung in einem Zylinder bewegbar ist, wobei der Zylinder der Kolbenpumpe derart ausgelegt ist, dass die zur Milchschaumerzeugung benötigte Luftmenge mit einem einzigen Kolbenhub bereitgestellt werden kann. Eine derartige Kolbenpumpe erlaubt eine exakte Dosierung der für die Milchschaumerzeugung benötigten Luftmenge sowie deren Bereitstellung in nur einem einzigen Kolbenhub, das heißt ohne Unterbrechung durch eine Kolbenumkehr. Mit der erfindungsgemäßen Kolbenpumpe ist eine beherrschbare Dosiercharakteristik erreichbar, wobei die bisher bei herkömmlichen Luftpumpen auftretenden Nachteile, wie beispielsweise starke Streuungen über die Serie, hohe Geräuschentwicklung, hohe Kosten und extreme Gegendruckabhängigkeit vermieden werden können. Durch das Bereitstellen der zur Milchschaumherstellung erforderlichen Luftmenge in einem einzigen Kolbenhub, kann die Luftzufuhr ohne Unterbrechung gewährleistet werden. Mit der erfindungsgemäßen Kolbenpumpe können zudem Totzeiten minimiert werden, indem der Kolben sowohl bei einer Hinbewegung als auch bei einer Zurückbewegung Luft fördert.

Bei einer vorteilhaften Weiterbildung der erfindungsgemäßen Luftpumpe, ist diese als Boxerkolbenpumpe ausgebildet, mit zumindest zwei Kolben, die mittels zweier Antriebseinrichtungen unabhängig voneinander bewegbar sind, oder mit zumindest zwei über eine Verbindungsstange miteinander verbundene Kolben, die in zumindest zwei sich gegenüberliegenden Zylindern geführt sind, wobei zwischen den Zylindern eine Antriebseinrichtung zum Hin- und Herbewegen der Kolben angeordnet ist. Die erfindungsgemäße Boxerkolbenpumpe stellt dabei die für die Zubereitung eines Produkts, insbesondere einer Milchschaumportion, benötigte Luft mit einem einzigen Kolbenhub zur Verfügung, wobei die Luftzufuhr hinsichtlich ihrer Menge und in der Charakteristik der Zuführung variabel ist. Insbesondere ist auch ein geringer Volumenstrom zu Beginn und Ende der Dosierung möglich, wobei die erfindungsgemäße Boxerkolbenpumpe zudem in der Lage ist, auf weitere Prozessparameter, wie bspw. einen Dampfdruck, flexibel einzustellen. Auf Luftblenden, wie sie bei bisher eingesetzten Luftpumpen erforderlich waren, kann bei der erfindungsgemäßen Boxerkolbenpumpe aufgrund der sehr geringen Volumenströme verzichtet werden. Mit der erfindungsgemäßen Boxerkolbenpumpe können zudem Totzeiten minimiert werden, da die Boxerkolbenpumpe gemäß der zweiten Alternative sowohl bei einer Hinbewegung des Kolbens als auch bei einer Zurückbewegung des Kolbens Luft fördert. Vorteilhafterweise weist jedoch einer der zumindest zwei Zylinder zumindest die benötigte Luftmenge zum Herstellen des gewünschten Milchschaums auf, so dass ein Hub des Kolbens ausreicht und insbesondere eine Richtungsumkehr und damit ein Stocken vermieden werden kann. Der zweite Zylinder übernimmt - sofern nicht genug Restvolumen im ersten Zylinder vorhanden ist - die Folgedosierung. Eine entsprechende Steuerung erfasst das Restvolumen und gleicht sie mit dem gewünschten Produkt ab und entscheidet, welcher Zylinder arbeitet. In Nebenzeiten kann die Pumpe zudem in eine Ruheposition fahren, um beim Start einer Dosierung das maximal mögliche Volumen bereitzustellen. Denkbar ist selbstverständlich auch, dass das Gesamtvolumen der Zylinder ist dabei mindestens auf die größte benötigte Luftmenge ausgelegt, wobei bei der Ausbildung als Boxerkolbenpumpe ein bisher nicht zur Verfügung stehender Bauraum innerhalb eines Kaffeeautomaten nun erschlossen werden kann. Die Luftpumpe kann dabei entweder zwei unabhängig voneinander arbeitende bzw. angetriebene Kolben aufweisen, so dass sogar eine Überlagerung der Kolbenbewegungen denkbar ist. Hierzu weist die Luftpumpe dann vorzugsweise zwei Antriebseinrichtungen auf. Die erfindungsgemäße Luftpumpe weist im Vergleich zu herkömmlichen Luftpumpe zumindest folgende Vorteile auf:
- Kostengünstig herzustellen,
- exaktes und kontrolliertes Zuführen selbst von geringen Luftmengen an das nachfolgende Milchschäumsystem,
- die Luftzufuhr ist hinsichtlich ihrer Menge und Charakteristik der Zuführung variabel, ohne dass dabei z.B. ein Pulsieren durch eine Drehzahländerung verstärkt wird,
- es ist ein geringer Volumenstrom zu Beginn und Ende der Dosierung möglich,
- die Luftdosierung findet innerhalb eines Hubes statt, d.h. es wird immer nur maximal eine Zylinderfüllung dosiert, wodurch innerhalb einer Produktzubereitung keine Richtungsumkehr notwendig ist und somit kein Pulsieren wie bei normalen Pumpen stattfindet,
- die in der Drehzahl veränderbare Antriebseinrichtung ermöglicht ein nahezu beliebig einstellbares Volumen pro Zeit (Fördermenge) und somit eine hohe Flexibilität bei der Produktzubereitung.

Bei einer vorteilhaften Weiterbildung der erfindungsgemäßen Lösung, ist die Verbindungsstange als Spindel ausgebildet. Eine Bewegung der Kolben erfolgt somit mittels einer verdrehbaren aber in Axialrichtung der Kolben festen Spindelmutter, die von der Antriebseinrichtung verdreht wird und dadurch die Kolben hin- oder herbewegt. Durch einen derartigen Spindeltrieb, der zudem selbsthemmend ausgebildet ist, lässt sich ein hoher Luftdruck mit einer geringen Leistung der Antriebseinrichtung erzielen, wobei aufgrund der Selbsthemmung der hohe Luftdruck auch bei einem Abschalten der Antriebseinrichtung gehalten werden kann. Generell kann die Antriebseinrichtung bspw. als Schrittmotor, als Gleichstrommotor (DC), als Wechselstrommotor (AC) ausgebildet sein. Ebenso ist selbstverständlich auch eine pneumatisch oder hydraulisch betriebene Antriebseinrichtung denkbar. Wesentlich hierbei ist lediglich, dass die Antriebseinrichtung einerseits kostengünstig ist und andererseits eine exakte Stellbewegung der Kolben ermöglicht.

Zweckmäßig weisen die Zylinder jeweils ein Einlassventil und ein Auslassventil auf, wobei die Zylinder ausgangsseitig über je eine Luftleitung mit einer zu einem Milchschäumer führenden Luftsammelleitung oder Dampfleitung miteinander verbunden sind. Die vorgesehenen Einlassventile und insbesondere die Auslassventile können dabei als passive und einfach ausgestaltete Blattventile ausgebildet sein oder aber auch als aktiv steuerbare Auslassventile, wodurch insbesondere ein vom Dampf abhängiger Vordruck erzeugt werden kann. Eine ähnliche Funktion kann bspw. durch aktiv schaltbare und in zumindest einer Luftleitung angeordnete Rückschlagventile erreicht werden.

Bei einer weiteren vorteilhaften Ausführungsform der erfindungsgemäßen Lösung ist zudem ein Baukastensystem für eine derartige Luftpumpe vorgesehen, welches zumindest zwei unterschiedliche Boxerkolbenpaare und zwei unterschiedliche Zylinderpaare aufweist. Hierdurch kann die erfindungsgemäße Boxerkolbenpumpe zum Dosieren von Luft in Milchschäumsystemen in Kaffeeautomaten einfach und flexibel montiert werden, wobei aufgrund der unterschiedlichen Größe der einzelnen Zylinder bzw. der zugehörigen Kolben unterschiedliche Luftfördermengen je Kolbenhub erzielt werden können. Mittels eines derartigen Baukastensystems kann insbesondere äußerst flexibel auf unterschiedliche Produktvarianten einzelner Kaffeeautomaten reagiert werden.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert,

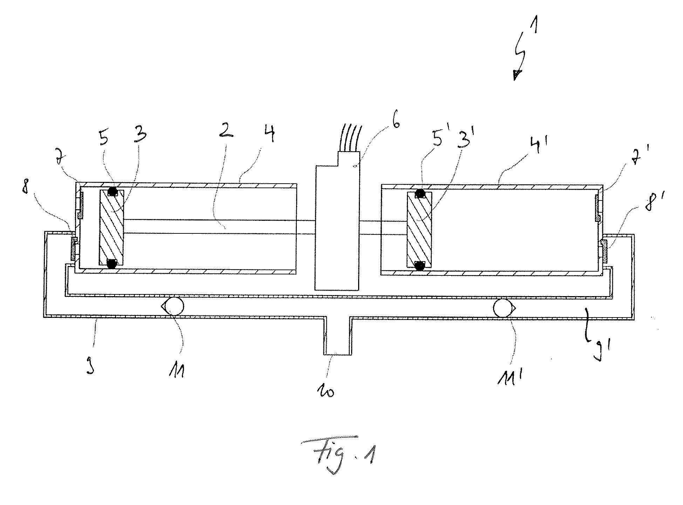

Die einzige Fig. 1 zeigt eine Schnittdarstellung durch eine erfindungsgemäße Luftpumpe.

Entsprechend der Fig. 1, ist eine als Kolbenpumpe ausgebildete, erfindungsgemäße Luftpumpe 1 dargestellt, die eine in vordefinierten Grenzen frei wählbare und gleichmäßige Luftmengenförderung hinsichtlich Volumenstrom und/oder Strömungsgeschwindigkeit ermöglicht. Hierdurch ist eine Luftförderung in ihrer Menge und in der Charakteristik der Zuführung variabel, d.h. es sind eine gleichmäßige Luftströmung und/oder die Flussrate (Luft pro Zeit) frei einstellbar (gesteuert und/oder geregelt), was bei bisherigen Systemen nicht möglich war, da die geförderte Luft pulsierte und der Volumenstrom abhängig von einer Pumpenkennlinie war, die wiederum durch Spannungsänderungen am Pumpenmotor oder Blenden nur begrenzt und aufwendig verändert werden konnte. Mittels der erfindungsgemäßen Luftpumpe 1 sind somit auch kleine und kleinste Luftmengen oder Volumenströme leicht und exakt zu fördern. Die Luftpumpe 1 kann dabei generell als Kolbenluftpumpe, insbesondere mit Doppelzylinder, Boxerkolben, doppelwirkender Zylinder usw., ausgeführt sein.

Gemäß der Fig. 1 weist die erfindungsgemäße Luftpumpe 1 zum Dosieren von Luft in einem Milchschäumsystem eines nicht näher beschriebenen Kaffeeautomaten mit zumindest zwei über eine Verbindungsstange 2 miteinander verbundene Kolben 3,3' auf. Die Kolben 3,3' sind dabei in zwei sich gegenüberliegenden Zylindern 4,4' geführt, wobei zwischen den beiden Zylindern 4,4' eine Antriebseinrichtung 6 zum Hin- und Herbewegen der Kolben 3,3' angeordnet ist. Die erfindungsgemäße Luftpumpe 1 ist demzufolge als Boxerkolbenpumpe ausgebildet, wobei im vorliegenden Fall sowohl die Kolben 3,3' als auch die Zylinder 4,4' identisch ausgebildet sind. Dies muss jedoch nicht der Fall sein.

Generell kann die Luftpumpe 1 zum Dosieren von Luft in Milchschäumsystemen in Kaffeeautomaten auch als normale Kolbenpumpe ausgebildet sein und zumindest einen Kolben 3 aufweisen, der mittels einer Antriebseinrichtung 6 in einem Zylinder 4 bewegbar ist, wobei der Zylinder 4 der Kolbenpumpe derart ausgelegt ist, dass die zur Milchschaumerzeugung benötigte Luftmenge mit einem einzigen Kolbenhub bereitgestellt werden kann. Eine Kolbenstange (hier als Verbindungsstange 2 bezeichnet) ist dabei vorzugsweise als Spindel ausgebildet, wobei die Antriebseinrichtung 6 eine mit der Spindel zusammenwirkende, drehbare Hülse antreibt und über diese den Kolben 3 verstellt. Eine derartige Kolbenpumpe entspricht im Wesentlichen der linken Hälfte der Darstellung in Fig. 1.

Die Luftdosierung findet in beiden Fällen vorzugsweise innerhalb eines Hubes statt, d.h. es wird immer nur maximal eine Zylinderfüllung dosiert, wodurch innerhalb einer Produktzubereitung keine Richtungsumkehr der Kolben 3,3' notwendig ist und somit kein Pulsieren wie bei normalen Pumpen stattfindet. Zudem ermöglicht die in der Drehzahl veränderbare Antriebseinrichtung 6 ein nahezu beliebig einstellbares Volumen pro Zeit (Fördermenge) und somit eine hohe Flexibilität bei der Produktzubereitung.

An dieser Stelle sei auch darauf hingewiesen, dass die Luftpumpe 1 alternative ebenfalls als Boxerkolbenpumpe ausgebildet sein kann, dabei jedoch zumindest zwei Kolben 3,3' aufweist, die mittels zweier Antriebseinrichtungen 6 unabhängig voneinander bewegbar sind. Hierdurch ist eine noch bessere Steuerung der Luftmengenzufuhr möglich, da auch eine Überlagerung der Kolbenbewegungen möglich ist und dadurch eine kontinuierliche Förderung ohne Totzeiten erreicht werden kann.

Die Kolben 3,3' sind über entsprechende Dichtungen 5,5' gegenüber einer Innenwandung der jeweiligen Zylinder 4,4' abgedichtet. Zudem ist die Verbindungsstange 2 vorzugsweise als Spindel ausgebildet, sodass in der Antriebseinrichtung 6 die entsprechende, nicht näher beschriebene Spindelmutter vorhanden ist, die in Axialrichtung der Kolben 3,3' fest jedoch verdrehbar ist und dadurch die Hin- und Herbewegung der Kolben 3,3' bewirkt. Generell kann die Antriebseinrichtung 6 als Schrittmotor, als Gleichstrommotor oder als Wechselstrommotor ausgebildet sein. Ebenfalls denkbar ist eine pneumatische oder hydraulische Betriebsweise der Antriebseinrichtung 6.

Jeder der Zylinder 4,4' weist ein Einlassventil 7,7' bzw. ein Auslassventil 8,8' auf, welches entweder als passives Blattventil ausgebildet ist oder welches gemäß einer besonders bevorzugten Ausführungsform zudem aktiv steuerbar ist, wodurch insbesondere ein vom Dampf des Milchschäumsystems abhängiger Vordruck einstellbar ist. Die beiden Zylinder 4,4' sind darüber hinaus ausgangsseitig über je eine Luftleitung 9,9' mit einer zu einer nicht näher bezeichneten Milchschäumer führenden Luftsammelleitung 10 miteinander verbunden. In zumindest einer der Luftleitungen 9,9' kann ein Rückschlagventil 11,11' angeordnet sein, welches federbeaufschlagt oder ebenfalls aktiv steuerbar ist. Generell kann der Dampfstrom, in den die Luft eingeblasen werden soll, je nach Betriebszustand, in seinen Druckwerten in einem bestimmten Bereich variieren, wobei durch die erfindungsgemäße Luftpumpe die Möglichkeit zum Erzeugen eines dampfabhängigen Vordruckes durch den Dampf selbst besteht, um damit die beispielsweise als Kolbenpumpe ausgebildete Luftpumpe in ihrer Bewegung zu unterstützen, wodurch ein balanciertes System geschaffen werden kann. Unter einem balancierten System ist dabei Folgendes zu verstehen: Die Luftpumpe dosiert Luft in den Dampfstrom der zum Milchschäumen benötigt wird. Auf Grund unterschiedlicher Betriebszustände des Dampfkessels (z.B. Heizhysterese, entnommene Dampfmenge), turbulente Dampfströmung, inhomogene Vorgänge beim Schäumen ergeben sich in der Dampfleitung Druckschwankungen. Das heißt auf der Druckseite der Luftpumpe herrscht ein veränderlicher Gegendruck, der zum Start der Luftdosierung nicht bekannt ist. Um diesen Gegendruck zu kompensieren könnte durch den besagten Dampfdruck ein Vordruck in der Luftpumpe aufgebaut werden, so dass diese immer gegen den beim Start anliegenden Dampfdruck beginnt Luft zu fördern und diesen nicht erst aufbauen muss. Optional wäre es bei einem pneumatischen / hydraulischen Pumpenantrieb möglich diesen durch Zuführung des Dampfdruckes an den Antrieb zu unterstützen und somit die Druckschwankungen zu kompensieren.

Die gemäß der Ausführungsform der Luftpumpe 1 in Fig. 1 gezeigte Ausführungsform weist dabei zwei identische und lediglich gegenüberliegend angeordnete Zylinder 4,4' auf, wobei selbstverständlich auch Ausführungsformen mit unterschiedlich großen oder unterschiedlich langen Zylinder 4,4' denkbar sind.

Besonders flexibel auf unterschiedliche Anforderungen kann darüber hinaus reagiert werden, sofern die erfindungsgemäße und als Boxerkolbenpumpe ausgebildete Luftpumpe 1 mittels eines Baukastensystems hergestellt bzw. montiert wird, bei welchem zumindest zwei unterschiedliche Kolbenpaare und zwei unterschiedliche Zylinderpaare vorgesehen sind. Eingesetzt wird die erfindungsgemäße Luftpumpe wie eingangs beschrieben in Milchschäumsystemen von Kaffeeautomaten. Von besonderem Vorteil bei der erfindungsgemäßen Luftpumpe 1 ist, dass mit dieser eine kostengünstige, zuverlässige und gleichmäßig fördernde Luftdosiereinheit für Milchschäumsysteme in Kaffeeautomaten geschaffen werden kann. Vor allem mit der erfindungsgemäßen Luftpumpe 1 können die bisher bei herkömmlichen Luftpumpen auftretenden Nachteile, wie bspw. nicht ausreichend beherrschbare Dosiercharakteristik, starke Streuungen über die Serie, extreme Gegendruckabhängigkeit, hohe Kosten und eine hohe Geräuschentwicklung minimiert oder sogar eliminiert werden. Von besonderem Vorteil ist, dass die Luftpumpe 1 bei der Luftzufuhr in ihrer Menge und in der Charakteristik der Zuführung variabel ist, ohne dass dabei z.B. ein Pulsieren durch Drehzahländerung verstärkt wird. Hierdurch ist insbesondere ein geringer Volumenstrom zu Beginn und Ende der Dosierung möglich.

## Patentansprüche

1. Luftpumpe (1) zum Dosieren von Luft in Milchschäumsystemen in Kaffeeautomaten,
**dadurch gekennzeichnet,**
**dass** die Luftpumpe (1) derart ausgebildet ist, dass sie eine in vordefinierten Grenzen frei wählbare und gleichmäßige Luftmengenförderung hinsichtlich Volumenstrom und/oder Strömungsgeschwindigkeit ermöglicht.

2. Luftpumpe nach Anspruch 1,
**dadurch gekennzeichnet,**
**dass** die Luftpumpe (1) als Kolbenpumpe ausgebildet ist und zumindest einen Kolben (3) aufweist, der mittels einer Antriebseinrichtung (6) in einem Zylinder (4) bewegbar ist, wobei der Zylinder (4) der Kolbenpumpe derart ausgelegt ist, dass die zur Milchschaumerzeugung benötigte Luftmenge mit einem einzigen Kolbenhub bereitgestellt werden kann.

3. Luftpumpe nach Anspruch 2,
**dadurch gekennzeichnet,**
**dass** eine Kolbenstange als Spindel ausgebildet ist und die Antriebseinrichtung (6) eine mit der Spindel zusammenwirkende, drehbare Hülse antreibt und über diese den Kolben (3) verstellt.

4. Luftpumpe nach einem der Ansprüche 1 bis 3,
**dadurch gekennzeichnet,**
- **dass** die Luftpumpe (1) als Boxerkolbenpumpe ausgebildet ist und zumindest zwei Kolben (3,3') aufweist, die mittels zweier Antriebseinrichtungen (6) unabhängig voneinander bewegbar sind, oder
- **dass** die Luftpumpe (1) als Boxerkolbenpumpe ausgebildet ist und zumindest zwei über eine Verbindungsstange (2) miteinander verbundene Kolben (3,3') aufweist, die in zumindest zwei sich gegenüberliegenden Zylindern (4,4') geführt sind, wobei zwischen den beiden Zylindern (4,4') eine einzige Antriebseinrichtung (6) zum Hin- und Herbewegen der Kolben (3,3') angeordnet ist.

5. Luftpumpe nach Anspruch 4, zweite Alternative,
**dadurch gekennzeichnet,**
**dass** die Verbindungsstange (2) als Spindel ausgebildet ist.

6. Luftpumpe nach einem der Ansprüche 1 bis 5,
**dadurch gekennzeichnet,**
- **dass** die Antriebseinrichtung (6) als Schrittmotor, als DC-Motor, als AC-Motor oder als EC-Motor ausgebildet ist, oder
- **dass** die Antriebseinrichtung (6) pneumatisch oder hydraulisch betrieben ist.

7. Luftpumpe nach einem der Ansprüche 1 bis 6,
**dadurch gekennzeichnet,**
**dass** die Zylinder (4,4') jeweils ein Einlassventil (7,7') und ein Auslassventil (8,8') aufweisen, wobei die Zylinder (4,4') ausgangsseitig über je eine Luftleitung (9,9') mit einer zu einem Milchschäumer führenden Luftsammelleitung (10) oder Dampfleitung miteinander verbunden sind.

8. Luftpumpe nach Anspruch 7,
**dadurch gekennzeichnet,**
**dass** in zumindest einer Luftleitung (9,9') ein Rückschlagventil (11,11') angeordnet ist.

9. Luftpumpe nach einem der Ansprüche 4 bis 8,
**dadurch gekennzeichnet,**
**dass** die zumindest zwei Zylinder (4,4') identisch sind oder eine unterschiedliche Größe, insbesondere einen unterschiedlichen Durchmesser oder eine unterschiedliche axiale Länge, aufweisen.

10. Baukastensystem für eine Luftpumpe (1) nach einem der vorhergehenden Ansprüche,
**dadurch gekennzeichnet,**
**dass** zumindest zwei unterschiedliche Boxerkolbenpaare und zwei unterschiedliche Zylinderpaare vorgesehen sind.

11. Kaffeeautomat mit einer Luftpumpe (1) nach einem der Ansprüche 1 bis 9.
